# FASCICULE DE BREVET EUROPEEN

(11) **EP 1 551 215 B1**
(45) Date de publication et mention de la délivrance du brevet: **26.08.2009**
(21) Numéro de dépôt: 03757132.0
(22) Date de dépôt: 10.06.2003
(51) Int. Cl.: A01D 34/416

(54) **FIL DE COUPE ORIENTE AMELIORE POUR UN APPAREIL DE COUPE DE VEGETAUX**
VERBESSERTER AUSGERICHTETER SCHNEIDDRAHT FÜR EIN PFLANZENSCHNEIDGERÄT
IMPROVED ORIENTED CUTTING WIRE FOR A PLANT CUTTING APPLIANCE

(30) Priorité: 07.06.2002 WO PCT/FR02/01959
(43) Date de publication de la demande: 13.07.2005
(73) Titulaire: Speed France S.A.S., 69400 Arnas (FR)
(72) Inventeur: LEGRAND, Emmanuel, 01240 ST GERMAIN SUR RENON (FR)
(74) Mandataire: Le Forestier, Eric
(86) Numéro de dépôt international: PCT/FR2003/001727
(87) Numéro de publication internationale: WO 2003/103373

(56) Documents cités:
- EP-A- 1 129 609
- JP-A- 07 184 446
- US-A- 5 761 816
- US-A1- 2002 023 356

## Description

La présente invention concerne d'une façon générale les appareils de coupe de végétaux, notamment débrousailleuses.

Depuis de nombreuses années, on a développé différentes formes de fils ou filaments de coupe destinés à être montés dans une tête de coupe, entraînée par un moteur électrique ou thermique, de manière à ce que la rotation rapide de la tête entraîne le ou les fils, qui tendent à adopter une étendue rectiligne sous l'effet de la force centrifuge. Ces fils sont en général réalisés par extrusion de polyamide.

Alors que les fils les plus anciens présentaient une section circulaire et étaient lisses sur toute leur étendue, on a maintenant développé des fils présentant des sections variées, censées améliorer la qualité de coupe (présence d'arêtes, etc.) et/ou la longévité du fil, et/ou censés diminuer le bruit de l'appareil en fonctionnement en jouant sur les turbulences.

On trouve ainsi des fils comportant des arêtes, des rainures, des gorges, ou encore des déformations locales du fil le long de son étendue.

On trouve par ailleurs des fils dits aérodynamiques, par exemple de profil en aile d'avion, en goutte d'eau ou en ellipse (voir par exemple US-A-5 761 816), ou encore une configuration torsadée, comme dans EP1129609.

De tels fils présentent certains avantages liés à leur meilleure pénétration dans l'air : moins de puissance requise pour le moteur, et/ou moins de consommation d'énergie, moins de bruit en fonctionnement, et au total meilleure efficacité de coupe.

De tels fils, qui présentent une hauteur limitée, ont néanmoins l'inconvénient d'être fragiles. En particulier, la vitesse de rotation accrue que ces fils profilés autorisent accroît l'intensité des chocs contre les végétaux, et la faible hauteur du fil augmente très sensiblement son risque de rupture. L'utilisation de tels fils pour de gros travaux est donc limitée.

La présente invention vise à proposer de nouveaux fils de coupe, qui présentent des avantages semblables à ceux des fils profilés existants en manière de pénétration dans l'air, mais qui soient plus robustes et mieux adaptés à de gros travaux.

Ainsi l'invention propose un fil de coupe selon la revendication 1 pour un appareil de coupe de végétaux tel qu'un coupe-bordures, une débroussailleuse, etc. comprenant une tête de coupe rotative apte à retenir le fil, le fil étant profilé possède un corps principal, de section uniforme sur toute sa longueur, dont le rapport entre la largeur, mesurée dans le sens de la coupe, et la hauteur est supérieur à environ 1,2 et inférieur à 2.

Le fil selon l'invention soit monobloc, soit constitué par ledit corps principal, en un premier matériau, et par un ou plusieurs appendices de coupe en un second matériau différent du premier; dans ce dernier cas, le corps principal et le ou les appendices de coupe sont de préférence réalisés par co-extrusion.
- le fil comprend deux appendices de coupe disposés de part et d'autre du corps principal.

L'invention propose également un ensemble de coupe selon la revendication 5 pour un appareil de coupe de végétaux tel qu'un coupe-bordures, une débroussailleuse, etc., comprenant une tête de coupe rotative et au moins un fil de coupe tel que défini ci-dessus s'étendant à partir de la tête de coupe et maintenu dans une orientation déterminée.

L'invention propose enfin un appareil de coupe de végétaux selon la revendication 6 qu'un coupe-bordures, une débroussailleuse, etc., **caractérisé en ce qu**'il comprend un ensemble de coupe selon la revendication 5, et un moteur pour entraîner en rotation ledit ensemble de coupe.

D'autres aspects, buts et avantages de la présente invention apparaîtront mieux à la lecture de la description détaillée suivante de formes de réalisation préférées de celle-ci, donnée à titre d'exemple non limitatif et faite en référence aux dessins annexés, sur lesquels :
Les figures 1 à 5 illustrent différents profils de fils de coupe tels qu'ils sont connus de art antérieure.
Les figures 6 et 7 illustrent des profils de fils de coupe selon l'invention.

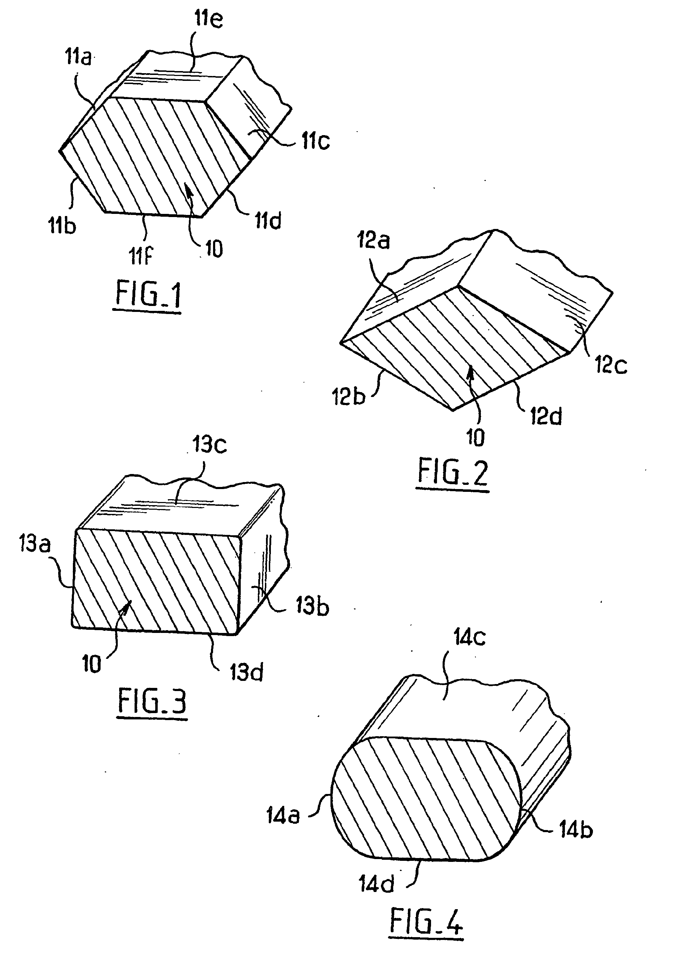

En référence tout d'abord à la figure 1, on a représenté schématiquement un fil ou filament de coupe 10 pour appareil de coupe de végétaux (coupe-bordures, débroussailleuse, etc.), réalisé typiquement par extrusion de polyamide.

Le fil selon cette première forme de réalisation présente ici une section uniforme sur toute son étendue, en forme d'hexagone irrégulier. Plus précisément, on trouve d'un côté deux faces 11a, 11b inclinées à environ 90° l'une par rapport à l'autre et à environ 45° par rapport à un plan horizontal médian du fil, du côté opposé deux autres faces 11c, 11d inclinées symétriquement, et deux faces horizontales de jonction 11e, 11f, respectivement supérieure ou inférieure. Les paires de faces 11a 11b d'une part et 11c, 11d d'autre part forment des arêtes vives pour une coupe tranchante des végétaux.

Le rapport entre la largeur L du fil et sa hauteur H supérieur à environ 1,2 et inférieur à 2, avec ici une valeur d'environ 1,6. On a en effet vérifié que cette gamme de valeurs permettait de profiter d'un bon aérodynamisme, avec les avantages mentionnés plus haut, et en même temps d'une bonne robustesse, le tout combiné en l'espèce à l'efficacité de coupe permise par les arêtes vives.

La figure 2 illustre une deuxième forme de réalisation, le fil 10 présentant une section en losange avec deux faces 12a, 12b définissant une première arête de coupe et deux faces opposées 12c, 12d définissant une seconde arête de coupe. Le rapport entre la largeur et la hauteur du fil est ici de 1,8.

La figure 3 représente une troisième forme de réalisation du fil dont la section est rectangulaire. Les végétaux sont attaqués par l'une parmi deux faces plates 13a, 13b, ce qui peut procurer un certain effet de broyage. Les faces supérieure et inférieure du fil sont indiquées en 13c, 13d. En outre, le fil présentant ici une surface de section transversale qui est maximale pour une hauteur et une largeur donnée, sa robustesse est maximale et compense l'absence d'un tranchant de coupe.

Le rapport entre la largeur et la hauteur du fil est dans cet exemple d'environ 1,65.

Un fil selon une quatrième forme de réalisation est illustré sur la figure 4. Il présente une section ovale avec deux faces latérales de travail arrondies 14a, 14b et deux faces plates respectivement supérieure et inférieure 14c et 14d.

Par rapport à la forme de réalisation de la figure 3, l'aérodynamisme et l'efficacité de coupe sont améliorés, sans que la robustesse soit sensiblement affectée.

Le rapport entre la largeur et la hauteur du fil est ici de 1,6.

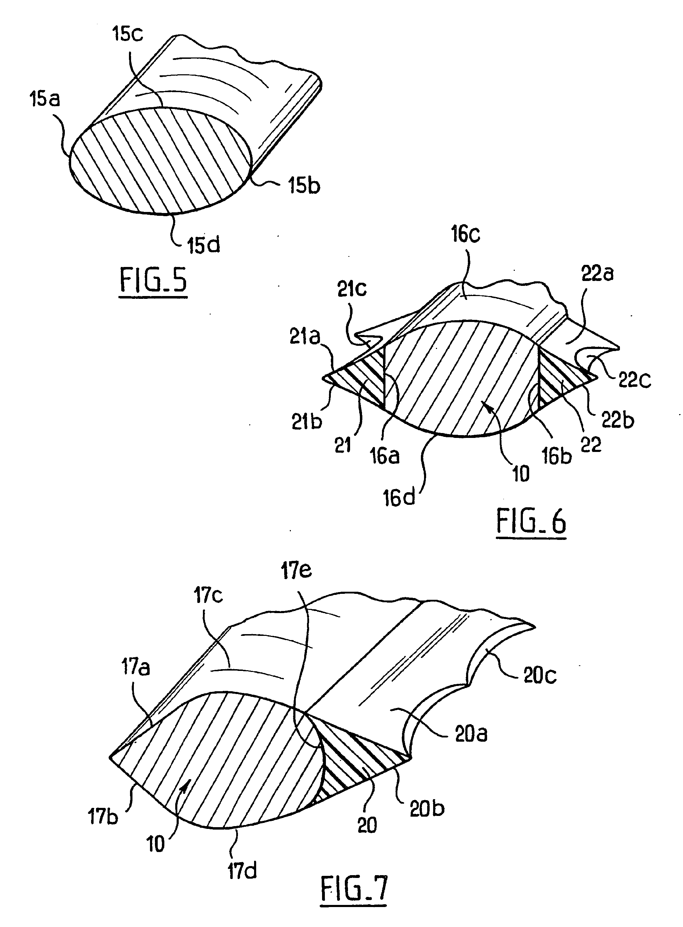

La figure 5 illustre une cinquième forme de réalisation du fil, dont la section transversale est essentiellement elliptique, avec deux régions 15a, 15b d'attaque des végétaux dont les courbures sont plus prononcées que les régions supérieure et inférieure 15c, 15d.

La figure 6 illustre une première forme de réalisation d'un fil de coupe selon l'invention réalisé avec deux matériaux. Un corps principal 10, réalisé par exemple en polyamide ordinaire, présente une section généralement elliptique de grand axe horizontal, en étant tronqué latéralement par deux faces verticales 16a, 16b. Ces faces verticales sont réunies entre elles par une face supérieure et une face inférieure arrondies, respectivement 16c, 16d.

Le fil comporte en outre deux ailes, respectivement 21 et 22, réalisées de préférence par co-extrusion d'un matériau, tel qu'un polyamide ou un co-polyamide, plus résistant que celui du corps 10, ces ailes présentant au niveau de dents de coupe une section triangulaire partant de la face 16a ou 16b, respectivement, avec une face inclinée supérieure et une face inclinée inférieure, respectivement 21a, 21b pour l'aile 21 et 22a, 22b pour l'aile 22. Les dents successives sont séparées par des creux arrondis, respectivement 21c, 22c, formés par exemple par des roulettes de conformation sur matière partiellement solidifiée dans le processus de fabrication par extrusion, ou encore par découpage dans la matière solidifiée.

Dans cet exemple de réalisation, c'est le rapport entre la largeur et la hauteur du seul corps 10 qui est pris en compte, ce rapport étant ici de l'ordre de 1,35.

On notera ici que cette forme de réalisation de l'invention décrite est symétrique, c'est-à-dire que le fil possède deux régions de travail identiques de part et d'autre de celui-ci. Ceci permet notamment, dans le cas d'un brin de fil maintenu avec une orientation donnée dans une tête de débroussailleuse, d'inverser la position du fil lorsque sa première région de travail est devenue usée.

La figure 7 illustre une deuxième forme de réalisation de l'invention, où un corps principal 10 du fil présente une région de fuite aérodynamique, avec deux faces inclinées 17a, 17b se réunissant en une arête vive de fuite, et une région d'attaque arrondie 17e, réunie aux faces de fuite 17a et 17b par des faces supérieure et inférieure, respectivement 17c et 17d, de courbures moins prononcées. La face d'attaque 17e reçoit, de préférence par co-extrusion, une partie de travail dentée 20 possédant au niveau des dents une section triangulaire, avec des faces supérieure et inférieure inclinées respectivement 20a, 20b, et des creux 20c séparant les dents.

Dans cet exemple, le rapport entre la largeur et la hauteur du corps 10 est d'environ 1,55.

Ce fil présente un excellent compromis entre aérodynamisme, robustesse et efficacité de coupe.

On notera ici qu'avec tous les fils de la présente invention, la tête de l'appareil de coupe possède des aménagements ou dispositifs pour maintenir le ou les fils dans l'orientation de travail, c'est-à-dire avec le grand axe de la section du fil s'étendant horizontalement, ou sensiblement horizontalement.

Bien entendu, de très nombreuses variantes peuvent être apportées à l'invention.

En premier lieu, un fil selon l'invention peut comporter toute déformation, canal, nervure, etc. Classiquement utilisé pour contribuer à une réduction du bruit en fonctionnement.

Ensuite, un fil selon l'invention peut être réalisé en deux matériaux différents ou davantage, notamment par co-extrusion ou par application sur un fil monobloc d'un revêtement à fonction particulière, notamment anti-usure.

Par ailleurs, chacun des fils selon l'invention peut être pourvu d'aménagements formant des dents de coupe dans au moins l'une de ses deux régions latérales. Dans le cas où ces aménagements sont identiques des deux côtés, le fil peut être utilisé dans un sens ou dans l'autre, ou dans un sens puis dans l'autre.

En outre, selon le diamètre du fil, celui-ci peut être utilisé soit en brins individuels de longueur donnée (fils de grand diamètre, pour gros travaux), soit en bobine dans le cas notamment d'un dévidoir automatique (fils de petit diamètre, pour gazon). Typiquement, selon l'application, la section du fil sera comprise entre environ 2 et 20 mm².

## Revendications

1. Fil de coupe pour un appareil de coupe de végétaux tel qu'un coupe-bordures, une débroussailleuse, etc. comprenant une tête de coupe rotative entraînée par un moteur et apte à retenir le fil, le fil étant profilé, **caractérisé en ce qu'**il possède un corps principal (10), de section uniforme sur toute sa longueur, en un premier matériau, et un ou plusieurs appendices de coupe (21, 22 ; 20) en un second matériau différent du premier, et **en ce que** le rapport entre la largeur, mesurée dans le sens de la coupe, et la hauteur du corps principal (10) est supérieur à 1,2 et inférieur à 2.

2. Fil selon la revendication 1, **caractérisé en ce que** les appendices de coupe (21, 22 ; 20) sont pourvus de dents.

3. Fil selon l'une des revendications 1 ou 2, **caractérisé en ce que** le corps principal (10) et le ou les appendices de coupe (21, 22 ; 20) sont réalisés par co-extrusion.

4. Fil selon l'une des revendications 1 à 3, **caractérisé en ce qu'**il comprend deux appendices de coupe (21, 22) disposés de part et d'autre du corps principal (10).

5. Ensemble de coupe pour un appareil de coupe de végétaux tel qu'un coupe-bordures, une débroussailleuse, etc., comprenant une tête de coupe rotative et au moins un fil de coupe selon l'une des revendications 1 à 4 s'étendant à partir de la tête de coupe et maintenu dans une orientation déterminée.

6. Appareil de coupe de végétaux tel qu'un coupe-bordures, une débroussailleuse, etc., **caractérisé en ce qu'**il comprend un ensemble de coupe selon la revendication 5, et un moteur pour entraîner en rotation ledit ensemble de coupe.

## Claims

1. Cutting string for plant cutting appliances such as a brush cutter, an edge trimmer, etc. that includes a rotating cutting head directed by an engine and that can retain the string, the string being profiled, **characterised in that** it has a main body (10), of uniform section over its entire length, in a first material, and one or several cutting appendices (21, 22; 20) in a second material that is different from the first, and **in that** the ratio between the width, measured in the cutting direction, and the height of the main body (10) is greater than 1.2 and less than 2.

2. String according to claim 1, **characterised in that** the cutting appendices (21, 22; 20) are provided with teeth.

3. String according to one of claims 1 or 2, **characterised in that** the main body (10) and the cutting appendix(es) (21, 22; 20) are created by co-extrusion.

4. String according to one of claim 1 to 3, **characterised in that** it includes two cutting appendices (21, 22) placed on either side of the main body (10).

5. Cutting assembly for a plant cutting appliance such as a brush cutter, an edge trimmer, etc. that includes a rotating cutting head and at least one cutting string according to any of claims 1 to 4 which extends from the cutting head and is maintained in a specific orientation.

6. Plant cutting appliance such as a brush cutter, an edge trimmer, etc., **characterised in that** it includes a cutting assembly according to claim 5, and an engine for rotation driving said cutting assembly.

## Patentansprüche

1. Schneiddraht für eine Schneidvorrichtung für Pflanzen, wie ein Kantenschneider, eine Motorsense etc., einen Rotationsschneidkopf umfassend, der von einem Motor angetrieben wird und ausgestaltet ist den Draht zu halten, wobei der Draht profiliert ist, **dadurch gekennzeichnet, dass** er einen Hauptkörper (10) aus einem ersten Material aufweist, dessen Querschnitt über seine gesamte Länge einheitlich ist, und ein oder mehrere Schneidansätze (21, 22; 20) aus einem zweiten Material, das sich von dem ersten unterscheidet, und **dadurch**, dass das Verhältnis zwischen der in Schnittrichtung gemessenen Breite und der Höhe des Hauptkörpers (10) größer als 1,2 und kleiner als 2 ist.

2. Draht nach Anspruch 1, **dadurch gekennzeichnet, dass** die Schneidansätze (21, 22; 20) mit Zähnen ausgestattet sind.

3. Draht nach einem der Ansprüche 1 oder 2, **dadurch gekennzeichnet, dass** der Hauptkörper (10) und der oder die Schneidansätze (21, 22; 20) durch Coextrusion verwirklicht sind.

4. Draht nach einem der Ansprüche 1 bis 3, **dadurch gekennzeichnet, dass** er zwei Schneidansätze (21, 22) umfasst, die an beiden Seiten des Hauptkörpers (10) angeordnet sind.

5. Schneidanordnung für eine Schneidvorrichtung für Pflanzen, wie einen Kantenschneider, eine Motorsense etc., einen Rotationsschneidkopf und wenigstens einen Schneiddraht nach einem der Ansprüche 1 bis 4 umfassend, der sich vom Schneidkopf erstreckt und in einer vorbestimmten Orientierung gehalten wird.

6. Schneidvorrichtung für Pflanzen, wie ein Kantenschneider, eine Motorsense etc., **dadurch gekennzeichnet, dass** sie eine Schneidanordnung nach Anspruch 5 und einen Motor umfasst, um die Schneidanordnung anzutreiben.
